(19)

**Europäisches Patentamt**
**European Patent Office**
**Office européen des brevets**

(11) **EP 1 459 206 B1**

(12) **EUROPEAN PATENT SPECIFICATION**

(45) Date of publication and mention
of the grant of the patent:
**11.07.2007 Bulletin 2007/28**

(51) Int Cl.:
**G06F 17/30** *(2006.01)*

(21) Application number: **02773177.7**

(22) Date of filing: **09.08.2002**

(86) International application number:
**PCT/US2002/025279**

(87) International publication number:
**WO 2003/054746 (03.07.2003 Gazette 2003/27)**

(54) **METHOD AND SYSTEM FOR SIMILARITY SEARCH AND CLUSTERING**

VERFAHREN UND VORRICHTUNG FÜR ÄHNLICHKEITSSUCHE UND GRUPPENBILDUNG

PROCEDE ET SYSTEME POUR UNE RECHERCHE DE SIMILARITES ET DE MISE EN GRAPPE

(84) Designated Contracting States:
**AT BE BG CH CY CZ DE DK EE ES FI FR GB GR IE IT LI LU MC NL PT SE SK TR**

(30) Priority: **20.12.2001 US 27195**

(43) Date of publication of application:
**22.09.2004 Bulletin 2004/39**

(73) Proprietor: **Endeca Technologies, Inc.**
**Cambridge, MA 02142 (US)**

(72) Inventor: **TUNKELANG, Daniel**
**Cambridge, MA 02138 (US)**

(74) Representative: **Palmer, Jonathan R.**
**Boult Wade Tennant,**
**Verulam Gardens,**
**70 Gray's Inn Road**
**London WC1X 8BT (GB)**

(56) References cited:
**US-A- 6 112 186**

• **SALTON G ET AL: "TERM-WEIGHTING APPROACHES IN AUTOMATIC TEXT RETRIEVAL" INFORMATION PROCESSING & MANAGEMENT, ELSEVIER, BARKING, GB, vol. 24, no. 5, 1988, pages 513-523, XP000716208 ISSN: 0306-4573**

• **GUHA S ET AL: "ROCK: a robust clustering algorithm for categorical attributes" DATA ENGINEERING, 1999. PROCEEDINGS., 15TH INTERNATIONAL CONFERENCE ON SYDNEY, NSW, AUSTRALIA 23-26 MARCH 1999, LOS ALAMITOS, CA, USA,IEEE COMPUT. SOC, US, 23 March 1999 (1999-03-23), pages 512-521, XP010326171 ISBN: 0-7695-0071-4**

• **DIAMANTINI C ET AL: "A conceptual indexing method for content-based retrieval" DATABASE AND EXPERT SYSTEMS APPLICATIONS, 1999. PROCEEDINGS. TENTH INTERNATIONAL WORKSHOP ON FLORENCE, ITALY 1-3 SEPT. 1999, LOS ALAMITOS, CA, USA,IEEE COMPUT. SOC, US, 1 September 1999 (1999-09-01), pages 192-197, XP010352474 ISBN: 0-7695-0281-4**

• **PI-SHENG DENG: "Using case-based reasoning for decision support" SYSTEM SCIENCES, 1994. VOL.IV: INFORMATION SYSTEMS: COLLABORATION TECHNOLOGY ORGANIZATIONAL SYSTEMS AND TECHNOLOGY, PROCEEDINGS OF THE TWENTY-SEVENTH HAWAII INTERNATIONAL CONFERENCE ON WAILEA, HI, USA 4-7 JAN. 1994, LOS ALAMITOS, CA, USA,IEEE COMPUT., 4 January 1994 (1994-01-04), pages 552-561, XP010097171 ISBN: 0-8186-5080-X**

• **BERGSTROM H: "A family of Delphi components for case-based reasoning" TOOLS WITH ARTIFICIAL INTELLIGENCE, 1999. PROCEEDINGS. 11TH IEEE INTERNATIONAL CONFERENCE ON CHICAGO, IL, USA 9-11 NOV. 1999, LOS ALAMITOS, CA, USA,IEEE COMPUT. SOC, US, 9 November 1999 (1999-11-09), pages 153-160, XP010365125 ISBN: 0-7695-0456-6**

## Description

## Field of the Invention

The present invention relates to similarity search, generally for searching databases, and to the clustering and matching of items in a database. Similarity search is also referred to as nearest neighbor search or proximity search.

## Background of the Invention

Similarity search is directed to identifying items in a collection of items that are similar to a given item or specification. Similarity search has numerous applications, ranging from recommendation engines for electronic commerce (e.g., providing the capability to show a user books that are similar to a book she bought and liked) to search engines for bioinformatics (e.g., providing the capability to show a user genes that have similar characteristics to a gene with known properties).

Conventionally, the similarity search problem has been defined in terms of Euclidean geometric distance in Euclidean space. The Euclidean geometric approach has been widely applied to similarity search since its use in very early work relating to similarity search. The divide-and-conquer method for calculating the nearest neighbors of a point in a two-dimensional geometric space proposed in M. I. Shamos and D. Hoey, "Closest-Point Problems" in Proceedings of the 16th Annual Symposium on Foundations of Computer Science, IEEE, 1975, is an example of such early work, in this case, in two dimensions.

Later work generalized the similarity search problem beyond two-dimensional spaces to geometric spaces of higher dimension. For example, the indexing structure proposed in A. Guttman, "R-Trees: A Dynamic Index Structure for Spatial Searching" in Proceedings of the ACM SIG-MOD Conference, 1984, provides a general method to address similarity search for low-dimensional geometric data.

Similarity search of high-dimensional geometric data imposes great demands on resources and raises performance problems. Indexing structures like R-trees perform poorly for high-dimensional spaces and are generally outperformed by brute-force approaches (i.e., scanning through the entire data set) when the number of dimensions reaches 30 (or even fewer). This problem is known as the "curse of dimensionality." The cost of brute-force approaches is proportional to the size of the data set, making them impractical for applications that need to provide interactive response times for similarity searches on large data sets.

More recent work suggests that, even if it is possible to solve the performance problems and build an apparatus that efficiently solves the similarity search problem for high-dimensional geometric data, there may still be a quality problem with the results, namely, that the output of such an apparatus may hold little value for real-world data. The reason for this problem is discussed in K. Beyer, J. Goldstein, R. Ramakrishnan, U. Shaft, "When is nearest neighbor meaningful?" in Proceedings of the 7th International Conference on Database Theory, 1999. In summary, under a broad set of conditions, as dimensionality increases, the distance from the given data point to the nearest data point in the collection approaches the distance to the farthest data point, thereby making the notion of a nearest neighbor meaningless.

The conventional, Euclidean geometric model's reliance on geometric terms to define nearest neighbors and nearest neighbor search constrains the generality of the model. In particular, in accordance with the model, a collection of materials on which a similarity search is to be performed is presumed to consist of a collection of points in a Euclidean space of **n** dimensions $\mathbb{R}^n$. When **n** is 2 or 3, this space may have a literal geometric interpretation, corresponding to a two or three-dimensional physical reality. In many applications, however, the collection of materials is not located in a physical space. Rather, typically each item in the collection is associated with up to **n** properties, and the properties are mapped to **n** real-valued dimensions to form the Euclidean space $\mathbb{R}^n$. Each item maps to a point in $\mathbb{R}^n$, which may be represented by a vector.

This mapping can pose many problems. Properties of items in the collection may not naturally map to real-valued dimensions. In particular, a property may take on a set of discrete unordered values, e.g., gender is one of {male, female}. Such values do not translate naturally into real-valued dimensions. Also, in general, the values for different properties, even if they are real-valued, may not be in the same units. Accordingly, normalization of properties is another issue.

Another significant issue with the Euclidean geometric model arises from correlations among the properties. The Euclidean distance metric in $\mathbb{R}^n$ is applicable when the n dimensions are independent and identically distributed. Normalization may overcome a lack of identical distribution, but normalization generally does not address dependence among the properties. Properties can exhibit various types of dependence. One strong type of dependence is implication. Two properties are related by implication if the presence of property X implies the presence of property Y. For example, Location: North Pole implies Climate: Frigid, defining a dependency. Many dependencies, however, are far more subtle. Dependencies may involve more than two properties, and the collection of dependencies for a collection of materials may be difficult to detect and impractical to enumerate. Even if the dimensions are normalized, a Euclidean distance metric factors in each property independently in determining the distance between two items. As a result, dependencies can reduce the usefulness of the Euclidean geometric approach with the Euclidean distance metric for the similarity search problem.

For example, a model of a collection of videos might represent each video as a vector based on the actors who play major roles in it. In a Euclidean geometric model, each actor would be mapped to his or her own dimension, i.e., there would be as many dimensions in the space as there are distinct actors represented in the collection of videos. One assumption that could be made to simplify the model is that the presence of an actor in a video is binary information, i.e., the only related information available in the model is whether or not a given actor played a major role in a given video. Hence, each video would be represented as an **n**-dimensional vector of 0/1 values, **n** being the number of actors in the collection. A video starring Aaron Eckhart, Matt Mallow, and Stacy Edwards, for example, would be represented as a vector in $\mathbb{R}^n$, containing values of 1 for the dimensions corresponding to those three actors, and values of 0 for all other dimensions.

While this vector representation seems reasonable in principle, it poses problems for similarity search. The distance between two videos is a function of how many actors the two videos have in common. Typically, the distance would be defined as being inversely related to the number of actors the two videos have in common. This distance function causes problems when a set of actors tends to act in many of the same videos. For example, a video starring William Shatner is likely also to star Leonard Nimoy, DeForest Kelley, and the rest of the Star Trek regulars. Indeed, any two Star Trek videos are likely to have a dozen actors in common. In contrast, two videos in a series with fewer regular actors (e.g., Star Wars) would be further apart according to this Euclidean distance function, even though the Star Trek movies are not necessarily more "similar" than the Star Wars movies. The dependence between the actors in the Star Trek movies is such that they should almost be treated as a single actor.

One approach to patch this problem is to normalize the dimensions. Such an approach would transform the n dimensions by assigning a weight to each actor, i.e., making certain actors in the collection count more than others. Thus, two videos having a heavily-weighted actor in common would be accorded more similarity than two videos having a less significant actor in common.

Such an approach, however, generally only addresses isolated dependencies. If the set of actors can be cleanly partitioned into disjoint groups of actors that always act together, then normalization will be effective. The reality, however, is that actors cannot be so cleanly partitioned. Actors generally belong to multiple, non-disjoint groups, and these groups do not always act together. In other words, there are complex dependencies. Even with normalization, a Euclidean distance metric may not accurately model data that exhibits these kinds of dependencies. Normalization does not account for context.

And such dependencies are the rule, rather than the exception, in real-world data.

Modifications to the Euclidean geometric model and the Euclidean distance metric may be able to address some of these shortcomings. A. Hinneburg, C. Aggarwal, and D. Keim, "What is the nearest neighbor in high dimensional spaces?" in Proceedings of the 26th VLDB Conference, 2000, has proposed a variation on the conventional definition of similarity search to address the problem of dependencies. The method of Hinneburg et al. uses a heuristic to project the data set onto a low-dimensional subspace whose dimensions are chosen based on the point on which the similarity search is being performed. Because this approach is grounded in Euclidean geometry, it still incorporates some inherent disadvantages of Euclidean approaches.

The clustering problem is related to the similarity search problem. The clustering problem is that of partitioning a set of items into clusters so that two items in the same cluster are more similar than two items in different clusters. Most mathematical formulations of the clustering problem reduce to NP-complete decision problems, and hence it is not believed that there are efficient algorithms that can guarantee optimal solutions. Existing solutions to the clustering problem generally rely on the types of geometric algorithms discussed above to determine the degree of similarity between items, and are subject to their limitations.

The matching problem is also related to the similarity search problem. The matching problem is that of pairing up items from a set of items so that a pair of items that are matched to each other are more similar than two items that are not matched to each other. There are two kinds of matching problems: bipartite and non-bipartite, In a bipartite matching problem, the items are divided into two disjoint and preferably equal-sized subsets; the goal is to match each item in the first subset to an item in the second subset. Non-bipartite matching is a special case of clustering. Existing solutions to the matching problem generally rely on the types of geometric algorithms discussed above to determine the degree of similarity between items, and are subject to their limitations.

An article entitled "Term-Weighting Approaches in Automatic Text Retrieval" by Salton, G. et al, in Information Processing and Management Vol. 24, No. 5, pp 513-523, 1988, discusses approaches to text indexing systems based on the assignment of appropriately weighted single terms. The weights discussed include an inverse document frequency which varies inversely with the number of documents in a collection to which a term is assigned.

## Summary of the Invention

The invention provides a computer implemented method as set out in claim 1, a computer program product as set out in claim 31 and a computer system for managing data records as set out in claim 36.

Generally, embodiments provide a similarity search method and system that use an alternative, non-Euclidean approach, are applicable to a variety of types of data sets, and return results that are meaningful for real-world data sets. Embodiments operate on a collection of items, each of which is associated with one or more properties, and employ a distance metric defined in terms of the distance between two sets of properties. The distance metric is defined by a function that is correlated to the number of items in the collection that are associated with properties in the intersection of the two sets of properties. If the number of items is low, the distance will typically be low; and if the number of items is high, the distance will typically be high. In one distance function in accordance with the invention, the distance is equivalent to the number of items in the collection that are associated with all of the properties in the intersection of the two sets of properties. For identifying the nearest neighbors of a single item or a group of items in a collection of items, the distance metric is applied between the set of properties associated with the reference item or items and the sets of properties associated with the other items in the collection, generally individually. The items may then be ordered in accordance with their distances from the reference in order to determine the nearest neighbors of the reference.

The invention has broad applicability and is not generally limited to certain types of items or properties. The invention addresses some of the weaknesses of the Euclidean geometric approach. The present invention does not depend on algorithms that compute nearest neighbors based on Euclidean or other geometric distance measures. The similarity search process of the present invention provides meaningful outputs even for some data sets that may not be effectively searchable using Euclidean geometric approaches, such as high-dimensional data sets. The present invention has particular utility in addressing the quality and performance problems that confront existing approaches to the similarity search problem.

A search system in accordance with the present invention implements the method of the present invention. In exemplary embodiments of the invention, the system performs a similarity search for a reference item or plurality of items on a collection of items contained within a database in which each item is associated with one or more properties. Embodiments of the search system preferably allow a user to identify a reference item or group of items or a set of properties to initiate a similarity search query. The result of the similarity search includes the nearest neighbors of the reference item or items, that is, the items closest to the reference item or items, in accordance with the distance function of the system. Some embodiments of a search system in accordance with the present invention preferably identify items whose distance from the reference item or group of items is equal to or lower than an explicit or implicit threshold value as the nearest neighbors of the reference.

In another aspect of the invention, embodiments of the search system preferably also support use of a query language that enables a general query for all items associated with a desired set of one or more properties. The result for such a query is the set of such items. In terms of the query language function, if two items are in the collection of items, than the distance between them, in accordance with the particular distance function described above, is the smallest number of items returned by any of the queries whose results include both items.

In embodiments of the invention, multidimensional data sets may be encoded in a variety of ways, depending on the nature of the data. In particular, properties may be of various types, such as binary, partially ordered, or numerical. The vector for an item (i.e., data point) may be composed of numbers, binary values, or values from a partially ordered set. The present invention may be adapted to a wide variety of numerical and nonnumerical data types.

In another aspect of the invention, the similarity search method and system of the present invention also form a building block for matching and clustering methods. Matching and clustering applications may be implemented, for example, by representing a set of materials either explicitly or implicitly as a graph, in which the nodes represent the materials and the edges connecting nodes have weights that represent the degree of similarity or dissimilarity of the materials corresponding to their endpoints. In these applications, the similarity search method and system of the present invention can be used to determine the edge weights of such a graph. Once such weights are assigned (explicitly or implicitly), matching or clustering algorithms can be applied to the graph.

**Brief Description Of The Drawings**

The invention may be further understood from the following description and the accompanying drawings, wherein:

   Figure 1 is a diagram that depicts a partial order as a directed acyclic graph.

   Figure 2 is a diagram that depicts a partial order of numerical ranges as a directed acyclic graph.

   Figure 3 is a diagram that illustrates the set of all subsets of reference properties for a search reference movie in a movie catalog.

   Figure 4 is a diagram that depicts an embodiment of the present invention as a flow chart.

   Figure 5 is a diagram that depicts an architecture for an embodiment of the present invention.

## Detailed Description Of Preferred Embodiments

Embodiments of the present invention represent items as sets of properties, rather than as vectors in $R^n$. This representation as sets of properties is widely applicable to many types of properties and does not require a general transformation of non-numerical properties into real numbers. A particular item's relationship with a particular property in the system may simply be represented as a binary variable.

For example, this representation may be applied to properties that can be related by a partial order. A partial order is a relationship among a set of properties that satisfies the following conditions:

i. Given two distinct properties X and Y, exactly one of the following is true:

1. X is an ancestor of Y (written as either X > Y or Y < X)
2. Y is an ancestor of X (written as either X < Y or Y > X)
3. X and Y are incomparable (written as X <> Y)

ii. The partial order is transitive: if X > Y and Y > Z, then X > Z.

There are numerous examples of partial orders in real-world data sets. For example, in a database of technical literature, subject areas could be represented in a partial order. This partial order could include relationships such as:

Mathematics > Algorithms
Mathematics > Algebra
Algebra > Linear Algebra
Computer Science > Operating Systems
Computer Science > Artificial Intelligence
Computer Science > Algorithms

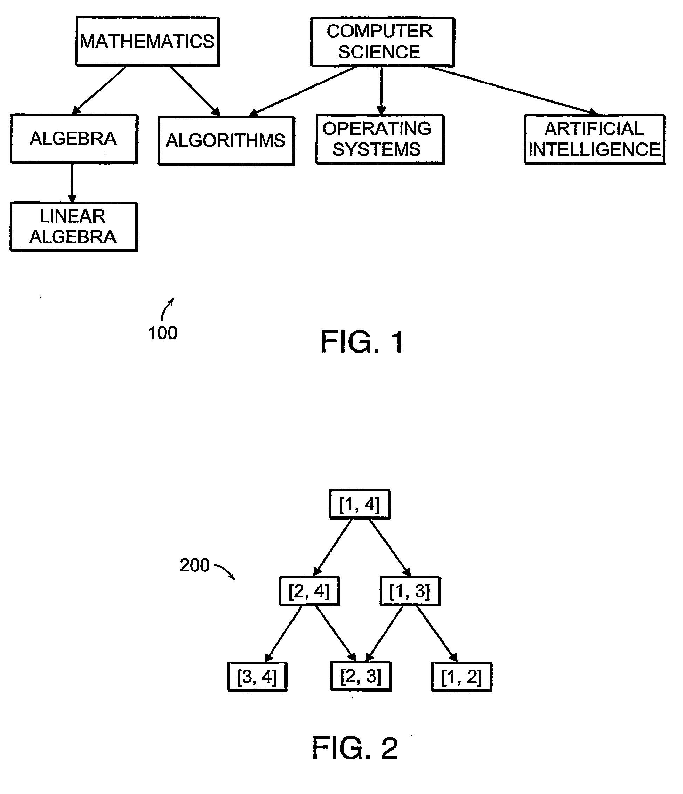

Transitivity further implies that Mathematics > Linear Algebra. Many pairs of properties are incomparable, e.g., Linear Algebra <> Algorithms. The diagram in Figure 1 depicts the partial order described above as a directed acyclic graph 100.

Numerical ranges also have a natural partial order. Given two distinct numerical ranges [x, y] and [x', y'], [x, y] > [x', y'] if $x \leq x'$ and $y \geq y'$. For example:

$$[1, 4] > [1, 3]$$

$$[1, 4] > [2, 4]$$

$$[1, 3] > [1, 2]$$

$$[1, 3] > [2, 3]$$

$$[2, 4] > [2, 3]$$

$$[2, 4] > [3, 4]$$

Transitivity also implies that [1, 4] > [2, 3]. An example of an incomparable pair of ranges is that [1, 3] <> [2, 4]. The diagram in Figure 2 depicts the partial order of numerical ranges described above as a directed acyclic graph 200.

In some embodiments of the invention, partially-ordered properties are addressed by augmenting each item's property set with all of the ancestors of its properties. For example, an item associated with Linear Algebra would also be associated with Algebra and Mathematics. In accordance with preferred embodiments of the invention, all property sets discussed hereinbelow are assumed to be augmented, that is, if a property is in a set, then so are all of that property's ancestors.

The distance between items is analyzed in terms of their property sets. One aspect of the present invention is the distance metric used for determining the distance between two property sets. A distance metric in accordance with the invention may be defined as follows: given two property sets $S_1$ and $S_2$, the distance between $S_1$ and $S_2$ is equal to the number of items associated with all of the properties in the intersection $S_1 \cap S_2$. In accordance with this metric, the distance between two items will be at least 2 and at most the number of items in the collection. This distance metric is used for the remainder of the detailed description of the preferred embodiments, but it should be understood that variations of this measure would achieve similar results. For example, distance metrics based on functions correlated to the number of items associated with all of the properties in the intersection $S_1 \cap S_2$ could also be used.

This distance metric accounts for the similarity between items based not only on the common occurrence of properties, but also their frequency. In addition, this distance metric is meaningful in part because it captures the dependence among properties in the data. Normalized Euclidean distance metrics may take the frequency of properties into account, but they consider each property independently. The distance metric of the present invention takes into account the frequencies of combinations of properties. For example, Lawyer, College Graduate, and High-School Dropout may all be frequently occurring properties, but the combination Lawyer + College Graduate is much more frequent than the combination Lawyer + High-School Dropout. Thus, two lawyers who both dropped out of high school would be considered more similar than two lawyers who both graduated from college. Such an observation can be made if the distance metric takes into account the dependence among properties. In general, not all of the properties in the data will be useful for similarity search. For example, two people who share February 29th as a birthday may be part of a select group, but it is unlikely that this commonality reveals any meaningful similarity. Hence, in certain embodiments of the present invention, only properties deemed meaningful for assessing similarity are taken into account by the similarity search method. Properties that are deemed irrelevant to the search can be ignored.

An example based on a movie catalog will be used to demonstrate how the distance metric may be applied to a collection of items. In such a catalog, a collection of movies could be represented with the following property sets:

*1. Die Hard*

    Director: John McTiernan
    Star: Bruce Willis
    Star: Bonnie Bedelia
    Genre: Action
    Genre: Thriller
    Series: Die Hard

*2. Die Hard 2*

    Director: Renny Harlin
    Star: Bruce Willis
    Genre: Action
    Genre: Thriller
    Series: Die Hard

*3. Die Hard: With a Vengeance*

    Director: John McTiernan
    Star: Bruce Willis
    Star: Samuel L. Jackson
    Genre: Action
    Genre: Thriller
    Series: Die Hard

*4. Star Wars*

    Director: George Lucas

    Star: Mark Hamill
    Star: Harrison Ford
    Genre: Sci-Fi
    Genre: Action
    Genre: Adventure
    Series: Star Wars

*5. Star Wars: Empire Strikes Back*

    Director: Irvin Kershner
    Star: Mark Hamill
    Star: Harrison Ford
    Genre: Sci-Fi
    Genre: Action
    Genre: Adventure
    Series: Star Wars

*6. Star Wars: Return of the Jedi*

    Director: Richard Marquand
    Star: Mark Hamill
    Star: Harrison Ford
    Genre: Sci-Fi
    Genre: Action
    Genre: Adventure
    Series: Star Wars

*7. Star Wars: The Phantom Menace*

    Director: George Lucas
    Star: Liam Neeson
    Star: Ewan McGregor
    Star: Natalie Portman
    Genre: Sci-Fi
    Genre: Action
    Genre: Adventure
    Series: Star Wars

*8. Raiders of the Lost Ark*

    Director: Stephen Spielberg
    Star: Harrison Ford
    Star: Karen Allen
    Genre: Action
    Genre: Adventure
    Series: Indiana Jones

*9. Indiana Jones and the Temple of Doom*

Director: Stephen Spielberg
Star: Harrison Ford
Star: Kate Capshaw
Genre: Action
Genre: Adventure
Series: Indiana Jones

*10. Indiana Jones and the Last Crusade*

Director: Stephen Spielberg
Star: Harrison Ford
Star: Sean Connery
Genre: Action
Genre: Adventure
Series: Indiana Jones

*11. Close Encounters of the Third Kind*

Director: Stephen Spielberg
Star: Richard Dreyfuss
Star: François Truffaut
Genre: Drama
Genre: Sci-Fi

*12. E.T.: the Extra-Terrestrial*

Director: Stephen Spielberg
Star: Dee Wallace-Stone
Star: Henry Thomas
Genre: Family
Genre: Sci-Fi
Genre: Adventure

*13. Until the End of the World*

Director: Wim Wenders
Star: Solveig Dommartin
Star: Pietro Falcone
Genre: Drama
Genre: Sci-Fi

*14. Wings of Desire*

Director: Wim Wenders
Star: Solveig Dommartin
Star: Bruno Ganz
Genre: Drama
Genre: Fantasy

Genre: Romance

*15. Buena Vista Social Club*

Director: Wim Wenders
Star: Ry Cooder
Genre: Documentary

Presumably a real movie catalog would contain far more than 15 movies, but the above collection serves as an illustrative example.

The distance between *Die Hard* and *Die Hard 2* is computed as follows. The intersection of their property sets is {Star: Bruce Willis, Genre: Action, Genre: Thriller, Series: Die Hard}. All three movies in the Die Hard series (but no other movies in this sample catalog) have all of these properties. Hence, the distance between the two movies is 3.

In contrast, *Die Hard* and *Die Hard With a Vengeance* also have the same director. The intersection of their property sets is {Director: John McTiernan, Star: Bruce Willis, Genre: Action, Genre: Thriller, Series: Die Hard}. Only these two movies share all of these properties; hence, the distance between the two movies is 2.

The above movies are obviously very similar. An example of two very dissimilar movies is *Star Wars* and *Buena Vista Social Club.* These two movies have no properties in common and the reference set of properties is the empty set; all of the movies in the collection can satisfy the reference set. Hence, the distance between the two movies is 15, i.e., the total number of movies in the collection.

An intermediate example is *Star Wars: The Phantom Menace* and *E.T.: the Extra-Terrestrial.* The intersection of their property sets is {Genre: Sci-Fi, Genre: Adventure}. Five movies have both of these properties (the four Star Wars movies and E.T.); hence, the distance between the two movies is 5.

Using the given distance metric, it is possible to order the movies according to their distance from a reference movie or from any property set. For example, the distances of all of the above movies from *Die Hard* are as follows:

*1. Die Hard:* 1
*2. Die Hard 2:* 3
*3. Die Hard: With a Verzgearzce:* 2
*4. Star Wars:* 10
*5. Star Wars: Empire Strikes Back:* 10
*6. Star Wars: Return of the Jedi:* 10
*7. Star Wars: The Phantom Menace:* 10
*8. Raiders of the Lost Ark:* 10
*9. Indiana Jones and the Temple of Doom:* 10
*10. Indiana Jones and the Last Crusade:* 10
*11. Close Encounters of the Third Kind:* 15
*12. E.T.: the Extra-Terrestrial:* 15

*13. Until the End of the World:* 15
*14. Wings of Desire:* 15
*15. Buena Vista Social Club:* 15

To summarize this distance ranking: the three movies in the Die Hard series are all within distance 3-*Die Hard: With a Vengeance* being at distance 2 because of the shared director-and the ten action movies are all within distance 10. The remaining movies have nothing in common with the reference, and are therefore at distance 15.

To further illustrate the distance ordering of items, the distances of all of the above movies from *Raiders of the Lost Ark* are as follows:

*1. Die Hard:* 10
*2. Die Hard 2:* 10
*3. Die Hard: With a Vengeance:* 10
*4. Star Wars:* 6
*5. Star Wars: Empire Strikes Back:* 6
*6. Star Wars: Return of the Jedi:* 6
*7. Star Wars: The Phantom Menace:* 10
*8. Raiders of the Lost Ark:* 1
*9. Indiana Jones and the Temple of Doom:* 3
*10. Indiana Jones and the Last Crusade:* 3
*11. Close Encounters of the Third Kind:* 5
*12. E.T.: the Extra-Terrestrial:* 5
*13. Until the End of the World:* 15
*14. Wings of Desire:* 15
*15. Buena Vista Social Club:* 15

In this case, the two other movies in the Indiana Jones series are at distance 3; the two Spielberg movies not in the Indiana Jones series are at distance 5; the three Star Wars movies with Harrison Ford are at distance 6; the remaining action movies are at distance 10; and the other movies are at distance 15.

In accordance with embodiments of the invention, the collection of items is preferably stored using a system that enables efficient computation of the subset of items in the collection containing a given set of properties.

A system based on inverted indexes could be used to implement such a system. An inverted index is a data structure that maps a property to the set of items containing it. For example, relational database management systems (RDBMS) use inverted indexes to map row values to the set of rows that have those values. Search engines also use inverted indexes to map words to the documents containing those words. The inverted indexes of an RDBMS, a search engine, or any other information retrieval system could be used to implement the method of the present invention.

In particular inverted indexes are useful for performing a conjunctive query-that is, to compute the subset of items in a collection that contain all of a given set of properties. This computation can be performed by obtaining, for each property, the set of items containing it, and then computing the intersection of those sets. This computation may be performed on demand, precomputed in advance, or computed on demand using partial information precomputed in advance.

An information retrieval system that provides a method for performing this computation efficiently is also described in co-pending applications: "Hierarchical Data-Driven Navigation System and Method for Information Retrieval," U.S. App. Ser. No. 09/573,305, filed May 18, 2000, and "Scalable Hierarchical Data-Driven Navigation System and Method for Information Retrieval," U.S. App. Ser. No. 09/961,131, filed October 21, 2001, both of which have a common assignee with the present application.

Given a system like those described above, it is possible to compute the distance between two items in the collection or between two property sets in general-by counting or otherwise evaluating the number of items in the collection containing all of the properties in the intersection of the two relevant property sets.

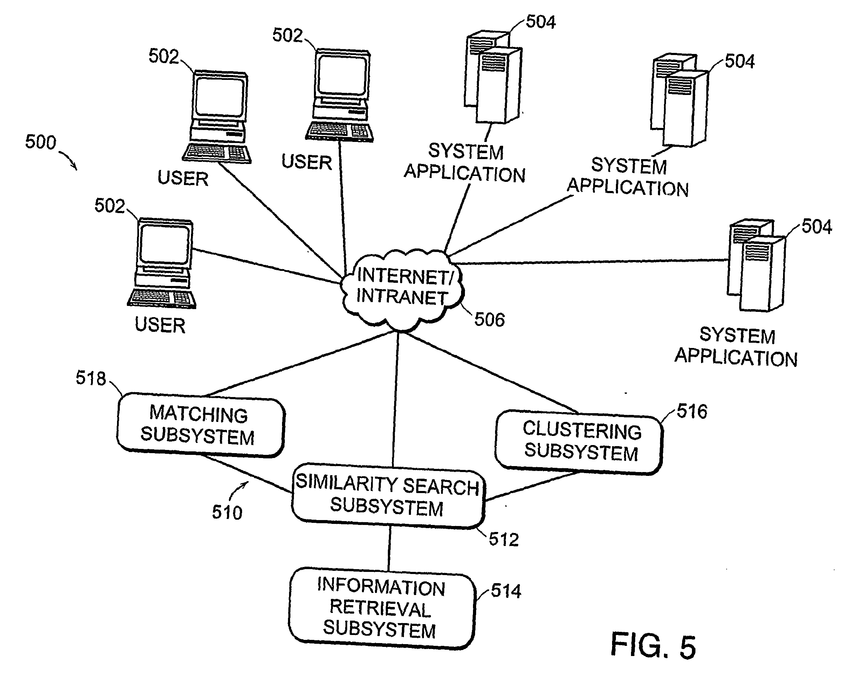

Figure 5 is a diagram that depicts an architecture 500 that may be used to implement an embodiment of the present invention. It depicts a collection of users 502 and system applications 504 that use an internet or intranet 506 to access a system 510 that embodies the present invention. This system 510, in turn, is comprised of four subsystems, a subsystem for similarity search 512, a subsystem for information retrieval 514, a subsystem for clustering 516, and a subsystem for matching 518. As described above, similarity search may rely on the inverted indexes of the information retrieval subsystem. As described below, clustering and matching may rely on the similarity search subsystem.

As discussed earlier, the present invention allows the distance function to be correlated to, and optionally, but not necessarily, equal to, the number of items in the collection containing the intersection of the two relevant property sets. Such a function is practical as long as its value can be computed efficiently using a relational database or other information retrieval system.

This distance metric can be used to compute the nearest neighbors of a reference item, using its property set, or of a desired property set. A query can be specified in terms of a particular item or group of items, or in terms of a set of properties. Additionally, a query that is not formulated as a set of valid properties can be mapped to a reference set of properties to search for the nearest neighbors of the query. The system can determine which item or items are closest, in absolute terms or within a desired degree, to the reference property set under this distance metric. For example, within a distance threshold of 5, the four nearest neighbors of *Raiders of the Lost Ark* are *Indiana Jones and the Temple of Doom* and *Indiana Jones and the Last Crusade* at distance 3 (the absolute nearest neighbors) and *Close Encounters of the Third Kind* and *E.T.: the Extra-Terrestrial* at distance 5 (also within the desired degree of 5).

It is possible to compute the nearest neighbors of a property set by computing distances to all items in the collection, and then sorting the items in non-decreasing order of distance. The "nearest" neighbors of the reference property set may then be selected from such a sorted list using several different methods. For example, all items within a desired degree of distance may be selected as the nearest neighbors. Alternatively, a particular number of items may be selected as the nearest neighbors. In the latter case, tie-breaking may be needed select a limited number of nearest neighbors when more than that desired number of items are within a certain degree of nearness. Tie-breaking may be arbitrary or based on application-dependent criteria. The threshold for nearness may be predefined in the system or selectable by a user. An approach based on computing distances to all items in the collection will provide correct results, but is unlikely to provide adequate performance when the collection of items is large.

While the foregoing method for nearest neighbor search applies the distance function explicitly, the distance metric of the present invention may also be applied implicitly, through a method that incorporates the distance metric without necessarily calculating distances explicitly. For example, another method to compute the nearest neighbors of a reference property set is to iterate through its subsets, and then, for each subset, to count the number of items in the collection containing all of the properties in that subset. This method may be implemented, for example, by using a priority queue, in which the priority of each subset is related to the number of items in the collection containing all of the properties in that subset. The smaller the number of items containing a subset of properties, the higher the priority of that subset. The priority queue initially contains a single subset: the complete reference set of properties. On each iteration, the highest priority subset on the queue is provided, and all subsets of the highest priority subset that can be obtained by removing a single property from that highest priority subset are inserted onto the queue. This method involves processing all subsets of properties in order of their distance from the original property set. The method may be terminated once a desired number of results or a desired degree of nearness has been reached.

The following example illustrates an application of this priority queue method for searching for the nearest neighbors of a query based on a movie in accordance with an embodiment of the invention using the movies catalog discussed earlier. The movie *E.T.: the Extra Terrestrial* may be selected from this catalog as the desired reference movie or target for which a similarity search is being formed in the movie catalog. In the catalog, this movie has the following 6 properties:

    Director: Stephen Spielberg
    Star: Dee Wallace-Stone
    Star: Henry Thomas
    Genre: Family
    Genre: Sci-Fi

    Genre: Adventure

In this example, the actors are disregarded, leaving the director and genre(s) as the desired reference properties. Hence, the target movie has the following 4 reference properties that compose the query for this search: {Spielberg, Family, Sci-Fi, Adventure}.

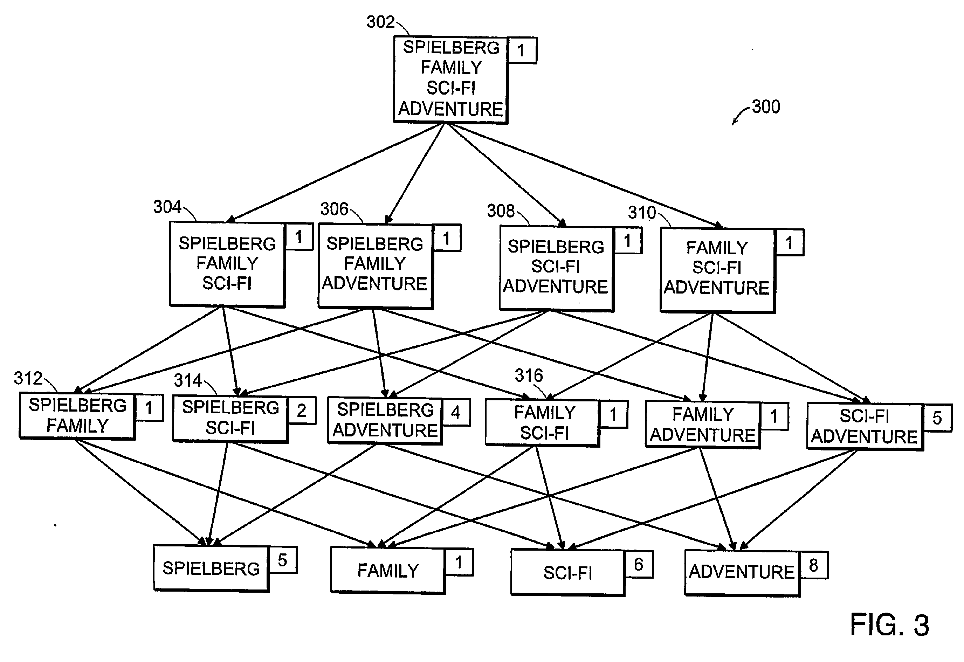

Figure 3 shows, as a directed acyclic graph 300, the set of all subsets of these four properties. The number to the right of each box shows the number of movies containing all properties in the subset.

To perform the similarity search using this priority queue method, the queue initially contains only one subset-namely, the set of all 4 properties 302, Spielberg, Family, Sci-Fi, and Adventure. This subset has a priority of 1, since only one movie, i.e., the reference movie, contains all 4 properties. The lower the number of movies, the higher the priority; hence, 1 is the highest possible priority.

If the distance is defined as equal to the number of movies that share the intersection of properties in two property sets, the priority of a subset is exactly equal to the distance of the subset from the query in this implementation. Otherwise, in accordance with the distance metric of the present invention, the priority is correlated to the distance of the subset from the query. Although the priorities of all subsets could be computed in accordance with Figure 3 prior to implementing the priority queue, the priority of a subset may be computed when the subset is added to the queue. Also, movies can be added to the search result when the first subset associated with the movie is removed from the queue.

When this set of 4 properties 302 is removed from the priority queue, it is replaced by 4 subsets of 3 properties 304, 306, 308 and 310; these are shown in the second level from the top in Figure 3. In this example, each of the four subsets 304, 306, 308 and 310 still only returns the single target movie and all of these subsets also have priority 1.

When, however, the priority-1 subset {Spielberg, Family, Sci-Fi} 304 is removed from the queue, it will be replaced by 3 subsets 312, 314, and 316: {Spielberg, Family } and{Family, Sci-Fi) each with priority 1 and {Spielberg, Sci-Fi} with priority 2. When this last set 316 is eventually removed from the queue, the Spielberg Sci-Fi movie *Close Encounters of the Third Kind* can be added to the search result.

Since, on each iteration a highest priority (fewest movies) subset is chosen from the queue, subsets will be chosen in decreasing order of priority. Hence, movies will show up in increasing order of distance from the query. The process can be terminated when a threshold number of search results have been found, or when a threshold distance has been reached, or when all of the subsets have been considered. For efficiency, to avoid evaluating the same subset more than once, when subsets are pushed onto the queue, the system can eliminate those that have already been seen. In general this type of method may not provide adequate performance for computing the nearest neighbors of a large property set.

Implementations that compute the nearest neighbors of a property set without necessarily computing its distance to every item in the collection or every subset of the property set may be more efficient. In particular, if the collection is large, preferred implementations may only consider distances to a small subset of the items in the collection or a small subset of the properties. Some embodiments of the present invention compute the nearest neighbors of a property set by using a random walk process. This approach is probabilistic in nature, and can be tuned to trade-off accuracy for performance.

Each iteration of the random walk process simulates the action of a user who starts from the empty property set and progressively narrows the set towards a target property set S along a randomly selected path. The simulated user, however, may stop mid-task at an intermediate subset of S and then randomly pick an item that has all of the properties in that intermediate subset. Items closer to the target property set S according to the previously described distance function are more likely to be selected, since they are more likely to remain in the set of remaining items as the simulated user narrows the set of items by selecting properties.

One implementation of the random walk process produces a random variable R(S) for a property set S with the following properties:

1. The range of R(S) is the set of items $\{x_1, x_2, ..., x_n\}$ in the collection.

2. Pr (R(S) = $x_i$) > 0 for all items $x_i$ in the collection. (i.e., for every item x; in the collection, there is a non-zero probability that R(S) takes on the property $x_i$)

3. Pr (R(S) = $x_i$)$\geq$ Pr (R(S) = $x_j$) if and only if dist (S, $x_i$)$\leq$ dist (S, $x_j$). (i.e., the probability that R(S) takes on the property x is a monotonic function of the distance dist (S, x))

The random variable is weighted towards $x_i$ with property sets that are relatively closer to the property set S.

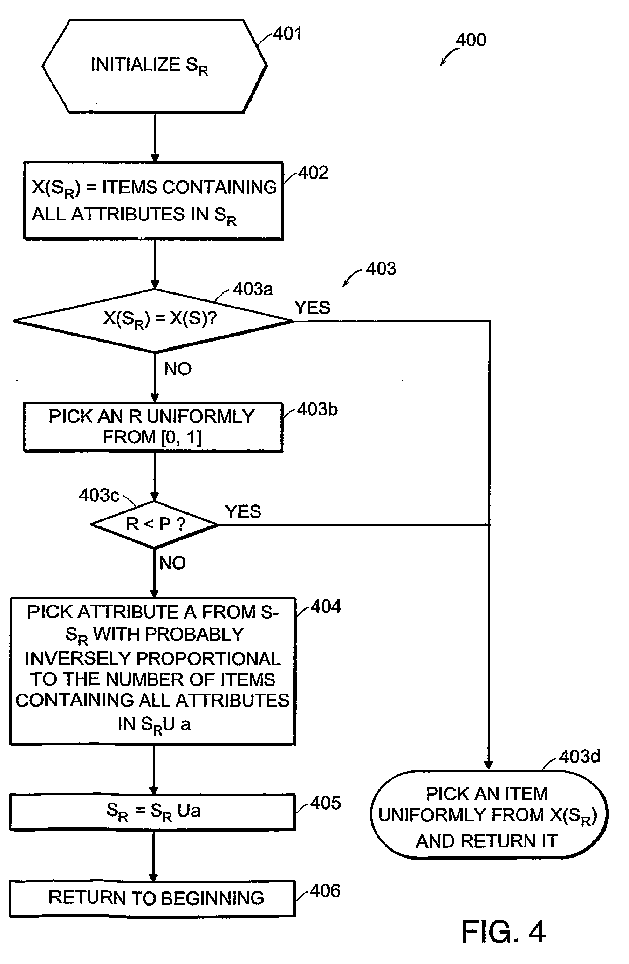

The property set S is the reference property set for a similarity search. A number of random walk processes may be able to generate a random variable R(S) with a distribution satisfying these properties as described above. A random walk process 400 in accordance with embodiments of the invention is illustrated in the flow chart of Figure 4. The states of this random walk 400 are property sets, which may correspond to items in the collection. The random walk process 400 proceeds as follows:

Step 401: Initialize $S_R$, the state of the random walk, to be the empty property set.

Step 402: Let $X(S_R)$ be the subset of items in the collection containing all of the properties in $S_R$.

Step 403: If $X(S_R) = X(S)$ then, in step 403a, or, with probability p, determined in steps 403b and 403c, using a uniform random distribution, choose an item from $X(S_R)$ and return it in step 403d, thus terminating the process.

Step 404: Otherwise, pick a property from S - $S_R$)-that is, the set of properties that are in S but not in $S_R$. This property is picked using a probability distribution where the probability of picking property a from S - $S_R$ is inversely proportional to the number of items in the collection that contain all the properties in the union $S_R$ U a.

Step 405: Let $S_R$ equal $S_R$ U a.

Step 406: Go back to Step 402.

The item returned by each iteration of this random walk process will be a random variable R(S) whose distribution satisfies the properties outlined above. The output of multiple, independent iterations of this process will converge to the distribution of this random variable. Each iteration of the random walk process implicitly uses the distance metric of the present invention in that, for a property set $S_R$, the random walk inherently selects items within a certain distance of S. In step 403, a random walk terminates with probability p, except where the entire collection has already been traversed. Probability p is a parameter that may be selected based on the desired features, particularly accuracy and performance, of the system. If p is small, any results will be relatively closer to the reference, but the process will be relatively slow. If p is large, any results may vary further from the reference, but the process will be relatively faster.

Using this random walk process, it is possible to determine the nearest neighbors of a property set by performing multiple, independent iterations of the random walk process, and then sorting the returned items in decreasing order of frequency. That is, the more frequently returned items will be the nearer neighbors of the reference property set. The nearest neighbors may be selected in accordance with the desired degree of nearness. The choice of the parameter p in the random walk process and the choice of the number of iterations together allow a trade-off of performance for accuracy.

The following example illustrates an application of this random walk method for the *E.T.* example presented earlier using the priority queue method. Again, the query is formulated as the set of the following 4 properties: {Spielberg, Family, Sci-Fi, Adventure}. Recall that Figure 3 shows, as a directed acyclic graph 300, the set of all subsets of these four properties.

$S_R$, the state of the random walk, is initialized to be the empty property set. $X(S_R)$, the subset of items in the collection containing all of the properties in $S_R$, is the set of all 15 movies in the collection. Obtaining a randomly generated number between 0 and 1, if the random number is less than p, then one of these 15 movies is selected at random and returned.

Otherwise, a property from S - $S_R$-that is, the set of properties that are in the target set S but are not in $S_R$--is selected and added to $S_R$. Since $S_R$ is empty, a property is selected from {Spielberg, Family, Sci-Fi, Adventure}. This property is selected using a probability distribution where the probability of selecting property a from S - $S_R$ is inversely proportional to the number of items in the collection that contain all of the properties in the union $S_R$ U a. Hence, Spielberg is selected with probability inversely proportional to 5; Family with probability inversely proportional to 1; Sci-Fi with probability inversely proportional to 6; and Adventure with probability inversely proportional to 8. Normalizing, we obtain the following probability distribution: Spielberg has probability 24 / 179; Family has probability 120 / 179; Sci-Fi has probability 20 / 179; and Adventure has probability 15 / 179.

If Family is picked, then *E.T.* will be returned, since it will be the only movie left in $X(S_R)$. Continuing the process with Spielberg selected, now $S_R$ is {Spielberg}, and $X(S_R)$ contains the 5 Spielberg movies. If a new randomly generated number is less than p, then one of these 5 movies is selected at random and returned.

Otherwise, another property from S - $S_R$ selected and added to $S_R$. Since $S_R$ is {Spielberg}, the property is selected from {Family, Sci-Fi, Adventure}, as follows: Family with probability inversely proportional to 1 (1 movie corresponds to {Spielberg, Family}); Sci-Fi with probability inversely proportional to 2 (2 movies correspond to {Spielberg, Sci-Fi}); and Adventure with probability inversely proportional to 4 (4 movies correspond to {Spielberg, Adventure}). Normalizing, we obtain the following probability distribution: Family has probability 4/7; Sci-Fi has probability 2 / 7; and Adventure has probability 1/7.

Again, if Family is picked, then *E.T.* will be returned, since it will be the only movie left in $X(S_R)$. Assuming that Sci-Fi is selected, now $S_R$ is {Spielberg, Sci-Fi}, and $X(S_R)$ contains the 2 movies with these two properties. If a new randomly generated number is less than p, then one of these 2 movies is selected at random and returned. Otherwise, the subsequent selection of either Family or Adventure ensures that *E.T.* will be returned.

The random walk process may be iterated as many times as appropriate to provide the desired degree of accuracy with an acceptable level of performance. The results of the random walk process are compiled and ranked according to frequency. Items with higher frequencies within a desired threshold can be selected as the nearest neighbors of the query.

The present invention provides a general solution for the similarity search problem, and admits to many varied embodiments, including variations designed to improve performance or to constrain the results.

One variation for performance is particularly appropriate when the similarity search is being performed on a reference item x in the collection. In that case, it is useful for the similarity search not to return the item itself. This variation may be accomplished by changing step 403 of the random walk process. Instead of randomly choosing an item from $X(S_R)$, the step randomly chooses an item from $X(S_R)$ - x. Under these conditions, it is possible that a particular iteration of the process will terminate without returning an item, because $X(S_R)$ - x may be empty. Over a number of successive iterations, however, the random walk process should return items.

Another variation is to replace the condition in step 403, termination with probability p, with a condition that the process terminates when $X(S_R)$ is below a specified threshold size. One advantage of this implementation is that it is no longer necessary to tune p. Another variation is to replace the behavior in step 403 (returning an item chosen from $X(S_R)$ using a uniform random distribution) with returning all or some of the items in $X(S_R)$. One advantage of this implementation is that individual iterations of the random walk process produce additional data points.

Another variation is to constrain the random walk by making the initial state non-empty. Doing so ensures that the process will only return items that contain all of the properties in the initial state. Such constraints may be useful in many applications.

Another variation is to use the above described method for similarity search in conjunction with other similarity search measures, such as similarity search measures based on Euclidean distance, in various ways. For example, similarity search could be performed for a particular reference using both a distance metric in accordance with the present invention and a geometric distance metric on the same collection of materials, and the outcomes merged to provide a result for the search. Alternatively, a geometric distance metric could be used to compute an initial result and the distance metric of the present invention could be used to analyze the initial result to provide a result for the search. The invention may also be implemented in a system that incorporates other search and navigation methods, such as free-text search, guided navigation, etc.

Another variation is to group properties into equivalence classes, and to then consider properties in the same equivalence class identical in computing the distance function. The equivalence classes themselves may be determined by applying a clustering algorithm to the properties.

The similarity search aspect of the present invention is useful for almost any application where similarity search is needed or useful. The present invention may be particularly useful for merchandising, data discovery, data cleansing, and business intelligence.

The described distance metric is also useful for applications in addition to similarity search, such as clustering and matching. The clustering problem involves partitioning a set of items into clusters so that two items in the same cluster are more similar than two items in different clusters. There are numerous mathematical formulations of the clustering problem. Generally, a set S of n items $i_1$, $i_2$, ..., $i_n$, and these items is to be partitioned into a set of k clusters $c_1$, $c_2$,..., $c_k$-where the number of clusters k is generally specified in advance, but may be determined by the clustering algorithm.

Since there are many feasible solutions to the clustering problem, a clustering application defines a function that determines the quality of a solution, the goal being to find a feasible solution that is optimal with respect to that function. Generally, this function is defined so that quality is improved either by reducing the distances between items in the same cluster or by increasing the distances between items in different clusters. Hence, solutions to the clustering problem typically use a distance function to determine the distance between two items. Traditionally, this distance measure is Euclidean. Clustering algorithms can be based on the distance function used by the present invention.

The following are examples of quality functions, with an indication afterwards as to whether they should be minimized or maximized to obtain high-quality clusters:

- The maximum distance between two items in the same cluster (minimize).

- The average (arithmetic mean) distance between two items in the same cluster (minimize).

- The minimum distance between two items in different clusters (maximize).

- The average (arithmetic mean) distance between two items in different clusters (maximize).

The quality function may be one of the above functions, or some other function that reflects the goal that items in the same cluster be more similar than items in different clusters.

The similarity search method and system can be used to define and compute the distance between two items in the context of the clustering problem. The clustering problem is often represented in terms of a graph of nodes and edges. The nodes represent the items and the edges connecting nodes have weights that represent the degree of similarity or dissimilarity of the corresponding items. In this representation, a clustering is a partition of the set of nodes into disjoint subsets. In the graph representation of the clustering problem, the similarity search system may be used to determine the edge weights of such a graph. Once such weights are assigned (explicitly or implicitly), known clustering algorithms can be applied to the graph. More generally, the distance function of the present invention can be used in combination with any clustering algorithm, exact or heuristic, that defines a quality function based on the distances among items.

The clustering problem is generally approached with combinatorial optimization algorithms. Since most formulations of the clustering problems reduce to NP-complete decision problems, it is not believed that there are efficient algorithms that can guarantee optimal solutions. As a result, most clustering algorithms are heuristics that have been shown-through analysis or empirical study-to provide good, though not necessarily optimal, solutions.

Examples of heuristic clustering algorithms include the minimal spanning tree algorithm and the k-means algorithm. In the minimal spanning tree algorithm, each item is initially assigned to its own cluster. Then, the two clusters with the minimum distance between them are fused to form a single cluster. This process is repeated until all items are grouped into the final required number of clusters. In the k-means algorithm, the items are initially assigned to k clusters arbitrarily. Then, in a series of iterations, each item is reassigned to the cluster that it is closest to. When the clusters stabilize-or after a specified number of iterations-the algorithm is done.

Both the minimal spanning tree algorithm and the k-means algorithm require a computation of the distance between clusters-or between an item and a cluster. Traditionally, this distance measure is Euclidean. The distance measure used by the present invention can be generalized for this purpose in various ways. The distance between an item and a cluster can be defined, for example, as the average, minimum, or maximum distance between the item and all of the items in the cluster. The distance between two clusters can be defined, for example, as the average, minimum, or maximum distance between an item in one cluster from the other cluster. As with the quality function, there are numerous other possible item-cluster and cluster-cluster distance functions based on the item-item distance function that can be used depending on the needs of a particular clustering application.

In some variations of clustering, the clusters are allowed to overlap-that is, the items are not strictly partitioned into clusters, but rather an item may be assigned to more than one cluster. This variation expands the space of feasible solutions, but can still be used in combination with the quality and distance functions described above.

In order to improve the performance of a clustering algorithm, it may desirable to sparsify the graph by only including edges between nodes that are relatively close to each other. One way to implement this sparsification is to compute, for each item, its set of nearest neighbors, and then to only include edges between an item and its nearest neighbors.

An application of clustering is to cluster the properties relevant to a set of items to generate equivalence classes of properties for similarity search. The clustering into equivalence classes can be performed using the distance metric used by the present invention. To apply the distance metric of the present invention, the properties themselves can be associated with sub-properties so that the properties are treated as items for calculating distances between them. One subproperty that may be associated with the properties, for example, is the items in the collection with which the properties are originally associated. The matching problem involves pairing up items from a set of items so that a pair of items that are matched to each other are more similar than two items that are not matched to each other. There are two kinds of matching problems: bipartite and non-bipartite. In a bipartite matching problem, the items are divided into two disjoint and preferably equal-sized subsets; the goal is to match each item in the first subset to an item in the second subset. In the graph representation of the clustering problem, this case corresponds to a bipartite graph. In a non-bipartite, or general, matching problem, the graph is not divided, so that an item could be matched to any other item.

The previously described clustering approaches can be used for non-bipartite matching. Generally, if there are n items (n preferably being an even number), they will be divided into n/2 clusters, each containing 2 items.

For bipartite matching algorithms that involve the use of a distance function, the input graph may be constructed by creating a node for each item, and defining the weight of the edge connecting two items to be the distance between the two items in accordance with the distance function used by the present invention. The matching can then be carried out in accordance with the remaining steps of the known algorithms.

As with clustering, it is possible to use sparsification to improve the performance of a matching algorithm - that is, by only including edges between nodes that are relatively close to each other. This sparsification can be implemented by computing, for each item, its set of nearest neighbors, and then to only include edges between an item and its nearest neighbors.

The foregoing description has been directed to specific embodiments of the invention. The invention may be embodied in other specific forms without departing from the scope of the invention. In particular, the invention may be applied in any system or method that involves the use of a distance function to determine the distance between two items or subgroups of items in a group of items. The items may be documents or records in a database, for example, that are searchable by querying the database. A system embodying the present invention may include, for example, a human user interface or an applications program interface. The embodiments, figures, terms and examples used herein are intended by way of reference and illustration only and not by way of limitation. The scope of the invention is indicated by the appended claims.

**Claims**

1. A computer implemented method for searching a collection of items, wherein each item in the collection has a set of properties, comprising the steps of:

obtaining a query composed of a first set of two or more properties;
applying a distance function to one or more of the items in the collection; and
identifying one or more result items based on the distance function; **characterized in that**:

the distance function determines a distance between the query and an item in the collection based on the number of items in the collection which have all of the properties in the intersection of the first set of properties and the set of properties for the item.

2. The method of claim 1, further including the step of associating each item in the collection with a set of properties.

3. The method of claim 1, wherein the step of identifying one or more result items includes identifying result items whose distance from the query is within a first threshold.

4. The method of claim 3, wherein the step of identifying one or more result items includes ranking the result items according to their distance from the query.

5. The method of claim 3, wherein the threshold is defined as a number of result items.

6. The method of claim 3, wherein the threshold is defined as a distance.

7. The method of claim 1, further including the step of returning the result items.

8. The method of claim 1, wherein the step of obtaining a query includes the step of mapping a received query to a set of one or more properties.

9. The method of claim 1, wherein one or more of the properties are binary.

10. The method of claim 1, wherein one or more of the properties are related by a partial order, and wherein, if an item is associated with a property, then the item is also associated with all ancestors of that property in the partial order.

11. The method of claim 6, wherein one or more of the properties represent numerical values or ranges, and wherein the partial order reflects a set of containment relationships among the numerical values or ranges.

12. The method of claim 1, wherein the properties are grouped into equivalence classes.

**13.** The method of claim 12, further including the step of grouping the properties into equivalence classes using clustering.

**14.** The method of claim 13, wherein each property has a set of subproperties, wherein the clustering is performed such that the distance between two properties in the collection is correlated to the number of properties in the collection that are associated with all of the subproperties common to both properties.

**15.** The method of claim 1, wherein the query corresponds to a single item in the collection.

**16.** The method of claim 1, wherein the query corresponds to a plurality of items in the collection.

**17.** The method of claim 1, wherein the query is independent of the items in the collection.

**18.** The method of claim 1, wherein the step of identifying one or more result items is constrained to a subcollection of the items in the collection.

**19.** The method of claim 18, wherein the subcollection is specified as an expression of properties.

**20.** The method of claim 19, wherein the expression includes a subset of the set of properties that compose the query.

**21.** The method of claim 1, wherein the step of obtaining a query includes identifying certain properties to be ignored in the step of obtaining a result.

**22.** The method of claim 1, wherein the distance function is applied explicitly.

**23.** The method of claim 1, wherein the distance function is applied implicitly.

**24.** The method of claim 23, wherein the step of identifying one or more result items includes the step of iterating a random walk process to select potential result items.

**25.** The method of claim 24, wherein the step of identifying one or more result items includes ranking the potential result items by frequency and selecting the potential result items having higher frequencies.

**26.** The method of claim 23, wherein the step of identifying one or more result items includes iterating through one or more subsets of the query and identifying items associated with the one or more subsets.

**27.** The method of claim 26, wherein the one or more subsets are prioritized according to the number of items in the collection that have all of the properties in each subset and wherein iterating through one or more subsets of the query is continued until a first threshold is reached.

**28.** The method of claim 1, wherein the step of identifying one or more result items includes applying a Euclidean distance function.

**29.** The method of claim 28, wherein the step of identifying one or more result items includes merging a first result determined by applying the distance function and a second result determined by applying the Euclidean distance function.

**30.** The method of claim 28, wherein the step of identifying one or more result items includes determining a first result by applying either the distance function or the Euclidean distance function and applying the other distance function to the first result.

**31.** A computer program product, residing on a computer readable medium, for use in searching a collection of items wherein each item in the collection has a set of properties, the computer program product comprising instructions for causing a computer to:

receive a query composed of two or more properties;
apply a distance function to the query and one or more items in the collection; and
identifying one or more result items based on the distance function; **characterized in that**:

the distance function determines a distance between the query and an item in the collection based on the number of items in the collection which have all of the properties in the intersection of the first set of properties and the set of properties for the item.

**32.** The computer program product of claim 31, wherein the instructions cause the computer to provide a result by identifying exactly the items whose distance from the query is within a threshold.

**33.** The computer program product of claim 31, wherein the instructions cause the computer to provide a result by identifying approximately the items whose distance from the query is within a threshold according to a heuristic.

**34.** The computer program product of claim 33, wherein the heuristic permits a trade-off between the accuracy and the performance of a search.

**35.** The computer program product of claim 33, wherein the heuristic includes the use of a random walk process.

36. A computer system for managing data records comprising:

an information retrieval subsystem (514) that stores and retrieves data records, each data record having a set of record properties; and a similarity search subsystem (512) that receives similarity search queries and processes similarity search queries based on a distance function, a similarity search query being associated with a set of query properties,

**characterized in that**:

the distance function determines a distance between the query and a data record in the collection based on the number of data records in the collection that have all of the properties in the intersection of the set of query properties and the set of record properties for the data record.

37. The computer system of claim 36, further including a clustering subsystem (516) that employs the distance function of the similarity search subsystem to construct a graph.


**Patentansprüche**

1. Computerimplementiertes Verfahren zum Suchen einer Sammlung von Posten, wobei jeder Posten in der Sammlung einen Satz von Eigenschaften aufweist, umfassend die folgenden Schritte:

Erhalten einer Abfrage, welche gebildet ist aus einem ersten Satz von zwei oder mehr Eigenschaften;
Anwenden einer Distanzfunktion auf eine oder mehrere der Posten in der Sammlung; und
Identifizieren von einem oder mehreren Ergebnisposten auf Grundlage der Distanzfunktion;
**dadurch gekennzeichnet, dass**:

die Distanzfunktion eine Distanz bestimmt zwischen der Abfrage und einem Posten in der Sammlung, und zwar auf Grundlage der Anzahl von Posten in der Sammlung, welche alle Eigenschaften in der Schnittmenge des ersten Satzes von Eigenschaften und des Satzes von Eigenschaften für den Posten aufweisen.

2. Verfahren nach Anspruch 1, ferner umfassend den Schritt eines Zuordnens eines jeden Postens in der Sammlung zu einem Satz von Eigenschaften.

3. Verfahren nach Anspruch 1, wobei der Schritt des Identifizierens von einem oder mehreren Ergebnisposten ein Identifizieren von Ergebnisposten umfasst, deren Distanz von der Abfrage sich innerhalb einer ersten Schwelle befindet.

4. Verfahren nach Anspruch 3, wobei der Schritt des Identifizierens von einem oder mehreren Ergebnisposten ein Einstufen der Ergebnisposten nach Maßgabe ihrer Distanz von der Abfrage umfasst.

5. Verfahren nach Anspruch 3, wobei die Schwelle definiert ist als eine Anzahl von Ergebnisposten.

6. Verfahren nach Anspruch 3, wobei die Schwelle als eine Distanz definiert ist.

7. Verfahren nach Anspruch 1, ferner umfassend den Schritt eines Zurückgebens der Ergebnisposten.

8. Verfahren nach Anspruch 1, wobei der Schritt eines Erhaltens einer Abfrage den Schritt eines Mappings einer empfangenen Abfrage auf einen Satz von einer oder mehreren Eigenschaften umfasst.

9. Verfahren nach Anspruch 1, wobei eine oder mehrere der Eigenschaften binär sind.

10. Verfahren nach Anspruch 1, wobei eine oder mehrere der Eigenschaften durch eine Teilordnung verwandt sind, und wobei dann, wenn einem Posten eine Eigenschaft zugeordnet ist, dem Posten ebenso alle Vorgänger dieser Eigenschaft in der Teilordnung zugeordnet sind.

11. Verfahren nach Anspruch 6, wobei eine oder mehrere der Eigenschaften numerische Werte oder Bereiche repräsentieren und wobei die Teilordnung einen Satz von Einschließungsbeziehungen zwischen den numerischen Werten oder Bereichen wiedergibt.

12. Verfahren nach Anspruch 1, wobei die Eigenschaften zu Äquivalenzklassen gruppiert sind.

13. Verfahren nach Anspruch 12, ferner umfassend den Schritt eines Kopierens der Eigenschaften zu Äquivalenzklassen unter Verwendung einer Clusterbildung.

14. Verfahren nach Anspruch 13, wobei jede Eigenschaft einen Satz von Untereigenschaften aufweist, wobei die Clusterbildung derart ausgeführt wird, dass die Distanz zwischen zwei Eigenschaften in der Sammlung mit der Anzahl an Eigenschaften in der Sammlung korreliert ist, denen alle beiden Eigenschaften gemeinsamen Untereigenschaften zugeordnet sind.

**15.** Verfahren nach Anspruch 1, wobei die Abfrage einem einzelnen Posten in der Sammlung entspricht.

**16.** Verfahren nach Anspruch 1, wobei die Abfrage einer Mehrzahl von Posten in der Sammlung entspricht.

**17.** Verfahren nach Anspruch 1, wobei die Abfrage von den Posten in der Sammlung unabhängig ist.

**18.** Verfahren nach Anspruch 1, wobei der Schritt eines Identifizierens von einem oder mehreren Ergebnisposten auf eine Untersammlung der Posten in der Sammlung eingeschränkt ist.

**19.** Verfahren nach Anspruch 18, wobei die Untersammlung spezifiziert ist als ein Ausdruck von Eigenschaften.

**20.** Verfahren nach Anspruch 19, wobei der Ausdruck einen Untersatz des Satzes von Eigenschaften umfasst, welche die Abfrage bilden.

**21.** Verfahren nach Anspruch 1, wobei der Schritt eines Erhaltens einer Abfrage ein Identifizieren von bestimmten Eigenschaften umfasst, welche in dem Schritt eines Erhaltens eines Ergebnisses ignoriert werden sollen.

**22.** Verfahren nach Anspruch 1, wobei die Distanzfunktion explizit angewendet wird.

**23.** Verfahren nach Anspruch 1, wobei die Distanzfunktion implizit angewendet wird.

**24.** Verfahren nach Anspruch 23, wobei der Schritt eines Identifizierens von einem oder mehreren Ergebnisposten den Schritt eines Iterierens eines Zufallsgangprozesses umfasst, um mögliche Ergebnisposten auszuwählen.

**25.** Verfahren nach Anspruch 24, wobei der Schritt eines Identifizierens von einem oder mehreren Ergebnisposten ein Einstufen der möglichen Ergebnisposten nach der Frequenz und ein Auswählen der möglichen Ergebnisposten mit höheren Frequenzen umfasst.

**26.** Verfahren nach Anspruch 23, wobei der Schritt eines Identifizierens von einem oder mehreren Ergebnisposten ein Iterieren durch einen oder mehrere Untersätze der Abfrage und ein Identifizieren von Posten, welche dem einen oder mehreren Untersätzen zugeordnet sind, umfasst.

**27.** Verfahren nach Anspruch 26, wobei der eine oder die mehreren Untersätze nach Maßgabe der Anzahl an Posten in der Sammlung, welche alle Eigenschaften in jedem Untersatz aufweisen, priorisiert sind und wobei ein Iterieren durch einen oder mehrere Untersätze der Abfrage fortgesetzt wird, bis eine erste Schwelle erreicht wird.

**28.** Verfahren nach Anspruch 1, wobei der Schritt eines Identifizierens von einem oder mehreren Ergebnisposten ein Anwenden einer Euklidschen Distanzfunktion umfasst.

**29.** Verfahren nach Anspruch 28, wobei der Schritt eines Identifizierens von einem oder mehreren Ergebnisposten ein Zusammenführen eines ersten Ergebnisses, welches durch Anwenden der Distanzfunktion bestimmt wird, und eines zweiten Ergebnisses, welches durch Anwenden der Euklidschen Distanzfunktion bestimmt wird, umfasst.

**30.** Verfahren nach Anspruch 28, wobei der Schritt eines Identifizierens von einem oder mehreren Ergebnisposten ein Bestimmen eines ersten Ergebnisses durch Anwenden entweder der Distanzfunktion oder der Euklidschen Distanzfunktion umfasst und ein Anwenden der anderen Distanzfunktion auf das erste Ergebnis umfasst.

**31.** Computerprogrammprodukt, welche sich auf einem computerlesbaren Medium befindet, zur Verwendung beim Suchen einer Sammlung von Posten, wobei jeder Posten in der Sammlung einen Satz von Eigenschaften aufweist, wobei das Computerprogrammprodukt Anweisungen umfasst, um den Computer zu veranlassen:

eine aus zwei oder mehreren Eigenschaften gebildete Abfrage zu empfangen; eine Distanzfunktion auf die Abfrage und eine oder mehrere Posten in der Sammlung anzuwenden; und einen oder mehrere Ergebnisposten auf Grundlage der Distanzfunktion zu identifizieren; **dadurch gekennzeichnet, dass**:

die Distanzfunktion eine Distanz bestimmt zwischen der Abfrage und einem Posten in der Sammlung, und zwar auf Grundlage der Anzahl von Posten in der Sammlung, welche alle Eigenschaften in der Schnittmenge des ersten Satzes von Eigenschaften und des Satzes von Eigenschaften für den Posten aufweisen.

**32.** Computerprogrammprodukt nach Anspruch 31, wobei die Anweisungen den Computer veranlassen, durch Identifizieren genau der Posten, deren Distanz von der Abfrage innerhalb einer Schwelle liegt, ein Ergebnis bereitzustellen.

**33.** Computerprogrammprodukt nach Anspruch 31, wobei die Anweisungen den Computer veranlassen, durch näherungsweises Identifizieren der Posten, deren Distanz von der Abfrage innerhalb einer Schwelle liegt, nach Maßgabe einer Heuristik ein Ergebnis bereitzustellen.

**34.** Computerprogrammprodukt nach Anspruch 33, wobei die Heuristik einen Tausch zwischen der Genauigkeit und der Leistung einer Suche gestattet.

**35.** Computerprogrammprodukt nach Anspruch 33, wobei die Heuristik die Verwendung eines Zufallsgangprozesses umfasst.

**36.** Computersystem zum Verwalten von Datenaufzeichnungen, umfassend:

ein Informationsabfrage-Untersystem (514), welches Datenaufzeichnungen speichert und abfragt, wobei jede Datenaufzeichnung einen Satz von Aufzeichnungseigenschaften aufweist; und
ein Ähnlichkeitssuche-Untersystem (512), welches Ähnlichkeitssuche-Abfragen empfängt und Ähnlichkeitssuche-Abfragen auf Grundlage einer Distanzfunktion verarbeitet, wobei einer Ähnlichkeitssuche-Abfrage ein Satz von Abfrageeigenschaften zugeordnet ist, **dadurch gekennzeichnet, dass**:

die Distanzfunktion eine Distanz bestimmt zwischen der Abfrage und einer Datenaufzeichnung in der Sammlung, und zwar auf Grundlage der Anzahl an Datenaufzeichnungen in der Sammlung, welche alle Eigenschaften in der Schnittmenge des Satzes von Abfrageeigenschaften und des Satzes von Aufzeichnungseigenschaften für die Datenaufzeichnung aufweisen.

**37.** Computersystem nach Anspruch 36, ferner umfassend ein Clusterbildung-Untersystem (516), welches die Distanzfunktion des Ähnlichkeitssuche-Untersystems verwendet, um einen Graphen aufzubauen.

**Revendications**

**1.** Procédé mis en oeuvre sur ordinateur pour effectuer une recherche dans une collection d'articles, chaque article de la collection ayant un ensemble de propriétés, comprenant les étapes suivantes :

obtention d'une requête composée d'un premier ensemble de deux ou plusieurs propriétés ; application d'une fonction de distance à un ou plusieurs des articles de la collection ; et

identification d'un ou plusieurs articles résultants sur la base de la fonction de distance;

**caractérisé en ce que**:

la fonction de distance détermine une distance entre la requête et un article de la collection sur la base du nombre d'articles de la collection qui ont toutes les propriétés se trouvant dans l'intersection du premier ensemble de propriétés et de l'ensemble de propriétés de l'article.

**2.** Procédé selon la revendication 1, comprenant en outre l'étape d'association de chaque article de la collection à un ensemble de propriétés.

**3.** Procédé selon la revendication 1, dans lequel l'étape d'identification d'un ou plusieurs articles résultants consiste à identifier des articles résultants dont la distance par rapport à la requête est en deçà d'un premier seuil.

**4.** Procédé selon la revendication 3, dans lequel l'étape d'identification d'un ou plusieurs articles résultants comprend le classement des articles résultants en fonction de leur distance par rapport à la requête.

**5.** Procédé selon la revendication 3, dans lequel le seuil est défini comme étant un nombre d'articles résultants.

**6.** Procédé selon la revendication 3, dans lequel le seuil est défini comme étant une distance.

**7.** Procédé selon la revendication 1, comprenant en outre l'étape consistant à renvoyer les articles résultants.

**8.** Procédé selon la revendication 1, dans lequel l'étape consistant à obtenir une requête comprend l'étape consistant à établir une correspondance entre une requête reçue et un ensemble d'une ou plusieurs propriétés.

**9.** Procédé selon la revendication 1, dans lequel une ou plusieurs des propriétés sont binaires.

**10.** Procédé selon la revendication 1, dans lequel une ou plusieurs des propriétés sont reliées par un ordre partiel et dans lequel, si un article est associé à une propriété, l'article est alors également associé à tous les ancêtres de cette propriété dans l'ordre partiel.

**11.** Procédé selon la revendication 6, dans lequel une ou plusieurs des propriétés représente(nt) des valeurs numériques ou des gammes et dans lequel l'ordre partiel traduit un ensemble de relations d'inclusions parmi les valeurs numériques ou les gammes.

**12.** Procédé selon la revendication 1, dans lequel les propriétés sont groupées en classes d'équivalence.

**13.** Procédé selon la revendication 12, comprenant en outre l'étape consistant à grouper les propriétés en classes d'équivalence en utilisant une segmentation.

**14.** Procédé selon la revendication 13, dans lequel chaque propriété a un ensemble de sous-propriétés, la segmentation étant effectuée de façon que la distance entre deux propriétés de la collection soit corrélée au nombre de propriétés de la collection et soit associée à toutes les sous-propriétés communes aux deux propriétés.

**15.** Procédé selon la revendication 1, dans lequel la requête correspond à un article unique de la collection.

**16.** Procédé selon la revendication 1, dans lequel la requête correspond à une pluralité d'articles de la collection.

**17.** Procédé selon la revendication 1, dans lequel la requête est indépendante des articles de la collection.

**18.** Procédé selon la revendication 1, dans lequel l'étape d'identification d'un ou plusieurs articles résultants est contrainte à une sous-collection des articles de la collection.

**19.** Procédé selon la revendication 18, dans lequel la sous-collection est spécifiée sous la forme d'une expression de propriétés.

**20.** Procédé selon la revendication 19, dans lequel l'expression comprend un sous-ensemble de l'ensemble de propriétés qui composent la requête.

**21.** Procédé selon la revendication 1, dans lequel l'étape consistant à obtenir une requête consiste à identifier certaines propriétés devant être ignorées lors de l'étape d'obtention d'un résultat.

**22.** Procédé selon la revendication 1, dans lequel la fonction de distance est appliquée explicitement.

**23.** Procédé selon la revendication 1, dans lequel la fonction de distance est appliquée implicitement.

**24.** Procédé selon la revendication 23, dans lequel l'étape d'identification d'un ou plusieurs articles résultants comprend l'étape consistant à effectuer une itération d'un processus de marche aléatoire pour sélectionner des articles résultants potentiels.

**25.** Procédé selon la revendication 24, dans lequel l'étape d'identification d'un ou plusieurs articles résultants comprend la classification des articles résultants potentiels en fonction de la fréquence et la sélection des articles résultants potentiels ayant les fréquences les plus élevées.

**26.** Procédé selon la revendication 23, dans lequel l'étape d'identification d'un ou plusieurs articles résultants comprend l'itération à travers un ou plusieurs sous-ensembles de la requête et l'identification d'articles associés à un ou plusieurs sous-ensembles.

**27.** Procédé selon la revendication 26, dans lequel les un ou plusieurs sous-ensembles sont hiérarchisés en fonction du nombre d'articles de la collection qui ont toutes les propriétés de chaque sous-ensemble et dans lequel l'itération à travers un ou plusieurs sous-ensembles de la requête est poursuivie jusqu'à ce qu'un premier seuil soit atteint.

**28.** Procédé selon la revendication 1, dans lequel l'étape d'identification d'un ou plusieurs articles résultants comprend l'application d'une fonction de distance Euclidienne.

**29.** Procédé selon la revendication 28, dans lequel l'étape d'identification d'un ou plusieurs articles résultants comprend le fusionnement d'un premier résultat déterminé en appliquant la fonction de distance et d'un deuxième résultat déterminé en appliquant la fonction de distance Euclidienne.

**30.** Procédé selon la revendication 28, dans lequel l'étape d'identification d'un ou plusieurs articles résultants comprend la détermination d'un premier résultat en appliquant soit la fonction de distance soit la fonction de distance Euclidienne et en appliquant l'autre fonction de distance au premier résultat.

**31.** Produit à base de programme informatique porté par un support lisible par ordinateur, pouvant être utilisé pour effectuer une recherche dans une collection d'articles, dans lequel chaque article de la collection a un ensemble de propriétés, le produit à base de programme informatique comprenant des instructions destinées à faire en sorte qu'un ordinateur :

reçoive une requête composée de deux ou plusieurs propriétés;
applique une fonction de distance par rapport à la requête et à un ou plusieurs des articles de la collection; et
identifie un ou plusieurs articles résultants sur la base de la fonction de distance;

**caractérisé en ce que**:

la fonction de distance détermine une distance entre la requête et un article de la collection sur la base du nombre d'articles de la collection qui ont toutes les propriétés se trouvant dans l'intersection entre le premier ensemble de propriétés et l'ensemble de propriétés de l'article.

**32.** Produit à base de programme informatique selon la revendication 31, dans lequel les instructions font en sorte que l'ordinateur fournisse un résultat en identifiant exactement les articles dont la distance par rapport à la requête est inférieure à un seuil.

**33.** Produit à base de programme informatique selon la revendication 31, dans lequel les instructions font en sorte que l'ordinateur fournisse un résultat en identifiant approximativement les articles dont la distance par rapport à la requête est inférieure à un seuil conformément à une heuristique.

**34.** Produit à base de programme informatique selon la revendication 33, dans lequel l'heuristique permet un compromis entre la précision et les performances d'une recherche.

**35.** Produit à base de programme informatique selon la revendication 33, dans lequel l'heuristique comprend l'utilisation d'un processus de marche aléatoire.

**36.** Système informatique pour gérer des enregistrements de données, comprenant:

un sous-système d'extraction d'informations (514) qui stocke et extrait des enregistrements de données, chaque enregistrement de données ayant un ensemble de propriétés d'enregistrement; et
un sous-système de recherche de ressemblance (512) qui reçoit des requêtes de recherche de ressemblance et traite des requêtes de recherche de ressemblance sur la base d'une fonction de distance, une requête de recherche de ressemblance étant associée à un ensemble de propriétés de requêtes, **caractérisé en ce que** :

la fonction de distance détermine une distance entre la requête et un enregistrement de données de la collection sur la base du nombre d'enregistrements de données de la collection qui ont toutes les propriétés se trouvant dans l'intersection entre l'ensemble de propriétés de requêtes et l'ensemble de propriétés d'enregistrements pour l'enregistrement de données.

**37.** Système informatique selon la revendication 36, comprenant en outre un sous-système de segmentation (516) qui utilise la fonction de distance du sous-système de recherche de ressemblance pour construire un graphe.

FIG. 1

FIG. 2

FIG. 3

FIG. 4

FIG. 5

EP 1 459 206 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 57330500 A

- US 96113101 A

**Non-patent literature cited in the description**

- **M. I. SHAMOS ; D. HOEY.** Closest-Point Problems. *Proceedings of the 16th Annual Symposium on Foundations of Computer Science, IEEE,* 1975
- **A. GUTTMAN.** R-Trees: A Dynamic Index Structure for Spatial Searching. *Proceedings of the ACM SIG-MOD Conference,* 1984
- **K. BEYER ; J. GOLDSTEIN ; R. RAMAKRISHNAN ; U. SHAFT.** When is nearest neighbor meaningful?. *Proceedings of the 7th International Conference on Database Theory,* 1999

- **A. HINNEBURG ; C. AGGARWAL ; D. KEIM.** What is the nearest neighbor in high dimensional spaces?. *Proceedings of the 26th VLDB Conference,* 2000
- **SALTON, G. et al.** Term-Weighting Approaches in Automatic Text Retrieval. *Information Processing and Management,* 1988, vol. 24 (5), 513-523